# EUROPÄISCHE PATENTSCHRIFT

(11) **EP 1 416 308 B1**
(45) Veröffentlichungstag und Bekanntmachung des Hinweises auf die Patenterteilung: **27.12.2006**
(21) Anmeldenummer: 02102514.3
(22) Anmeldetag: 31.10.2002
(51) Int. Cl.: G02B 21/18, G02B 21/26, G01N 21/956

(54) **Vergleichendes optisches System**
Comparing optical system
Système optique de comparaison

(43) Veröffentlichungstag der Anmeldung: 06.05.2004
(73) Patentinhaber: Leica Microsystems CMS GmbH, 35578 Wetzlar (DE)
(72) Erfinder: Gilbert, Manfred, 35641, Schöffengrund (DE)
(74) Vertreter: Grunert, Marcus

(56) Entgegenhaltungen:
- DE-U- 8 713 186
- US-A- 4 680 627
- US-A- 5 557 456
- US-A- 5 684 627
- US-A- 5 712 725
- US-A- 5 886 813
- "Preciscion in every case, Microscopy systems for criminal investigation and documentation" LEICA MICROSYSTEMS, 2000, XP002236367 Wetzlar

## Beschreibung

Die Erfindung betrifft ein vergleichendes optisches System gemäß dem Oberbegriff der Anspruchs 1.

Die deutsche Patentschrift 30 06 379 offenbart ein Defektprüfungssystem zur vergleichenden Prüfung eines Standardobjekts und eines Prüflings. Der Prüfling und das Standardobjekt sind auf einem gemeinsamen Träger und sowohl das Standardobjekt als auch der Prüfling werden über optische Mittel abgebildet und zusammengeführt, so dass ein Vergleich möglich ist.

Die deutsche Offenlegungsschrift DE 41 03 457 zeigt ein Vergleichsmikroskop zur Betrachtung zweier ähnlicher Objekte durch zwei Objektive, mit einer Einrichtung zur Zusammenführung der beiden Bilder zur vergleichenden Betrachtung ausgestaltet ist. Die beiden Objektive sind jeweils Teil eines Einzelmikroskops, wobei als Einrichtung zur Zusammenführung der beiden Bilder eine Videomischvorrichtung vorgesehen ist, der die Videosignale zweier die Bilder der Mikroskope aufnehmenden Videokameras zugeführt werden. Eine Synchronverstellung der Mikroskoptische ist nicht erkannt worden.

Das U.S. Patent 4,403,839 zeigt eine vergleichende optische Einrichtung, die zur simultanen Beobachtung von zwei Objekten ausgebildet ist. Eine Brücke umfasst die optischen Mittel zum Zusammenführen der Strahlengänge, die von den Mikroskop oder dem Makroskop erzeugt werden. Das Beleuchtungslicht wird dabei mittels des Fototubus in das System eingeführt. Wie die einzelnen Objekte auf einem oder mehreren Tische angeordnet sein müssen ist in der Schrift nicht erwähnt.

Diese oben beschriebenen Makroskope oder Mikroskope werden in entsprechenden Systemen zur Durchführung von forensischen Vergleichsuntersuchungen benutzt, die als Vergleichsmikroskope oder Vergleichsmakroskope ausgebildet sind. In einer bekanntesten Ausführungsform werden zwei Einzelmikroskope, bzw. Einzelmakroskope verwendet, die durch eine Brücke miteinander verbunden sind. In der Brücke ist eine Vorrichtung zum Zusammenführen der beiden durch die Einzelmikroskope/Makroskope erzeugten Einzelbilder enthalten. Durch einen an der Brücke angeordneten gemeinsamen Tubus hindurch kann der Bediener des Vergleichsmikroskops/Makroskops die Bilder von auf zwei verschiedenen Tischen angeordneten Objekten als übereinanderliegend betrachten. Durch ein jeweiliges Ausblenden von einander entsprechenden Teilbereichen der beiden Proben ein zusammengesetztes Bild entsteht, welches einen unmittelbaren Vergleich, z.B. der einen Probenhälfte mit der andern Probenhälfte, ermöglicht.

Bei forensischen Untersuchungen ist es zur Aufklärung von Verbrechen oftmals erforderlich, das Bild einer ersten Probe, mit dem Bild einer zweiten Probe zu vergleichen, um nähere Informationen über den Hergang eines Verbrechens zu erhalten.

So werden z.B. als Objekte, die durch die Schlagbolzen einer Waffe erzeugten Abdrücke an Patronenhülsen miteinander verglichen, um festzustellen, ob bei zwei oder mehreren Verbrechen dieselbe Tatwaffe eingesetzt wurde.

Eine weitere bekannte Anwendung von optischen Vergleichsuntersuchungen besteht darin, die Echtheit von Dokumenten, insbesondere von Banknoten, zu kontrollieren, um herauszufinden, ob es sich um Fälschungen handelt.

Schließlich ist es zur Aufklärung von Verbrechen oftmals erforderlich, z.B. am Tatort aufgefundene Fasern von Kleidungsstücken mit den Fasern bekannter Kleidungsstücke zu vergleichen, um Rückschlüsse darüber zu erhalten, wie ein Täter bei einer Straftat bekleidet war.

Der Erfindung liegt die Aufgabe zugrunde ein vergleichendes optisches System zu schaffen, das benutzerfreundlich ausgestaltet ist und das reproduzierbare Ergebnisse liefert.

Die objektive Aufgabe wird durch ein vergleichendes optisches System gelöst, das die Merkmale des Patentanspruchs 1 aufweist.

Die Erfindung hat den Vorteil, dass jedes bildaufnehmende, optische Teilsystem einen motorisch bewegbaren XYZ-Tisch besitzt, auf dem eine zu untersuchende Probe aufgelegt ist. Ferner ist eine Steuereinheit vorgesehen, die die motorisch bewegbaren XYZ-Tische (8a, 8b) synchron in allen drei Raumrichtungen bewegt. Falls die vergleichenden optischen Systeme als Makroskope ausgebildet sind, ist die Steuereinheit als Steuer- und Einstellvorrichtung ausgebildet, an der ein Ein-/Ausschalter vorgesehen ist, über den die Synchronverstellung der XYZ-Tische an- bzw. ausgeschaltet werden kann. Die Synchronverstellung hat den Vorteil, dass bei der Betätigung eines Betätigungselements für eine Bewegungsrichtung eines XYZ-Tisches, beide XYZ-Tische genau gleichmäßig, synchron verstellt werden. Ebenso kann den Makroskopen jeweils eine Fernsteuereinrichtung zugeordnet sein, die zur Tisch- und Fokussteuerung verwendet werden kann. Dabei ist es auch möglich die Tisch- und Fokussteuerung der beiden Fernsteuereinrichtungen derart zu schalten, dass ein synchrone Bewegung möglich ist. Die auf den zu untersuchenden Objekten vorhandenen Strukturen sind von ihrer Dimension oft größer als der Bereich, der im Okular bzw. der mit angeschlossenen Kamera zu sehen ist. Um das gesamte Objekt vergleichen zu können, müssen beide XYZ-Tische synchron in X-Richtung, Y-Richtung und der Z-Richtung verschoben werden. Die synchrone Verstellung ermöglicht es, dass mit nur jeweils einem X-Betätigungselement oder Y-Betätigungselement oder der Z-Feinverstellung für jede der Achsen X, Y und Z die beiden XYZ-Tisch synchron verschoben werden. Dies hat den Vorteil, dass die Auswertung der zu untersuchenden Objekte erheblich verbessert wird. Eine Voraussetzung für die Synchronisierung ist zumindest die Motorisierung der drei Achsen der XYZ-Tische.

Weitere vorteilhafte Ausgestaltungen der Erfindung können den Unteransprüchen entnommen werden.

In der Zeichnung ist der Erfindungsgegenstand schematisch dargestellt und wird anhand der Figuren nachfolgend beschrieben. Dabei zeigen:
- Fig. 1: eine perspektivische Ansicht einer ersten Ausführungsform des vergleichenden optischen Systems, wobei die optischen Teilsysteme als Makroskop ausgebildet sind;
- Fig. 2: eine perspektivische Ansicht einer zweiten nicht beanspruchten Ausführungsform eines vergleichenden optischen Systems, wobei die optischen Teilsysteme als Mikroskop ausgebildet sind, und
- Fig. 3: eine Detailansicht einer Steuereinheit mit, der die XYZ-Tische des vergleichenden optischen Systems synchron bewegbar sind, und

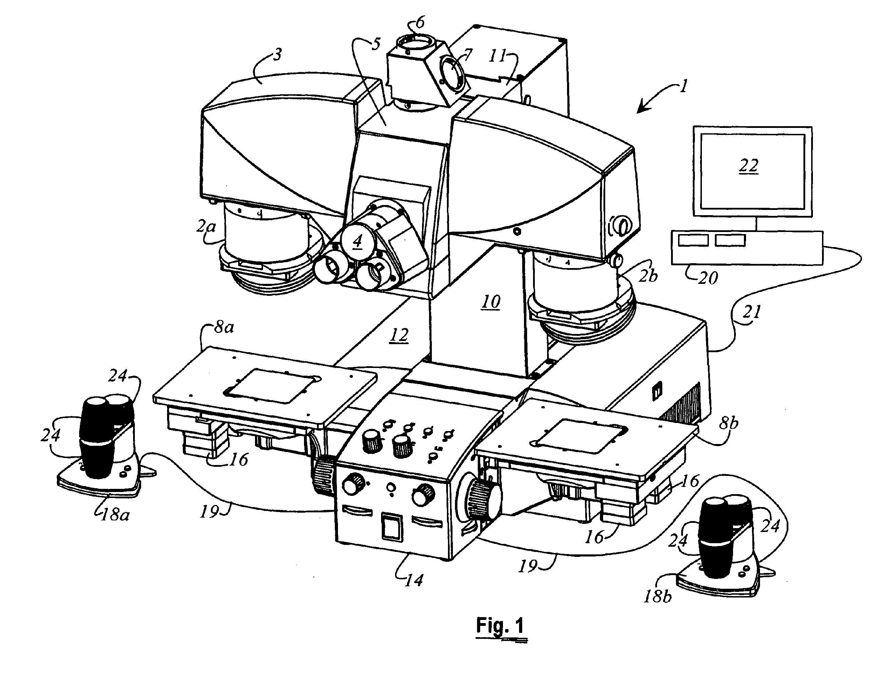

Fig. 1 zeigt ein vergleichendes optisches System 1. Das vergleichende optische System 1 besteht in dieser Ausführungsform aus einem ersten und einem zweiten Makroskop 2a und 2b, die als bildaufnehmende, optische Teilsysteme ausgestaltet sind. Mechanisch und optisch sind das erste und zweite Makroskop 2a und 2b über eine Brücke 3 miteinander verbunden. Die Brücke 3 besitzt einen Einblick 4 für einen Benutzer und einen Tubus 5 mit einem Anschluss 6 für eine Kamera (nicht dargestellt). Der Einblick 4 für den Benutzer kann schwenkbar ausgestaltet sein, um für den Benutzer eine ergonomische Arbeitsposition zu erhalten. Der Tubus 5 kann noch einen weiteren Anschluss 7 besitzen, über den z.B. eine zweite Kamera (nicht dargestellt) aufgesetzt werden kann. Dem ersten Makroskop 2a ist ein erster XYZ-Tisch 8a zugeordnet. Dem zweiten Makroskop 2b ist ein zweiter XYZ-Tisch 8b zugeordnet. Sowohl auf dem ersten als auch auf dem zweiten XYZ-Tisch 8a und 8b ist jeweils ein zu vergleichendes Objekt (nicht dargestellt) abgelegt. In der Vergleichsmakroskopie werden als Objekte sowohl Geschosse als auch Werkzeuge begutachtet und die dadurch hinterlassenen Spuren optisch miteinander verglichen und ausgewertet. Dazu wird in den meisten Fällen das Bild in der Mitte so geteilt, dass in der linken Hälfte das Objekt, das auf dem ersten XYZ-Tisch 8a positioniert ist, und in der rechten Hälfte das Objekt, das auf dem zweiten XYZ-Tisch 8b positioniert ist, zu sehen ist.

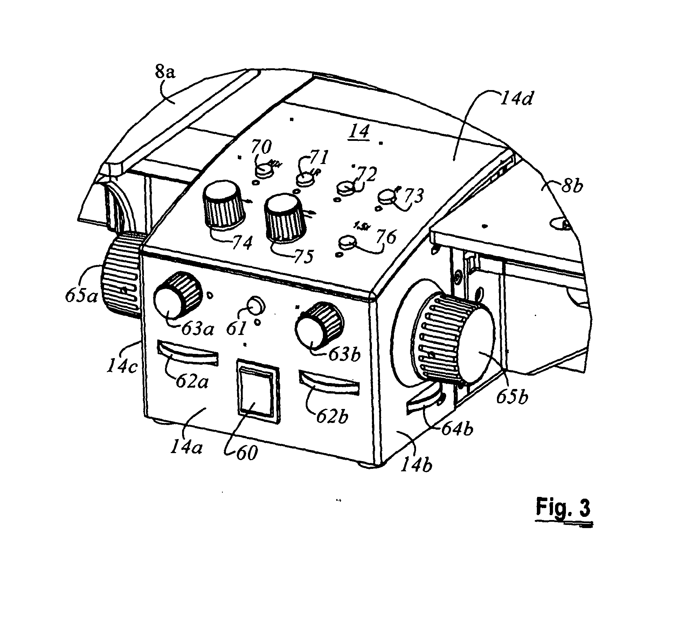

Die Brücke 3 zusammen mit dem ersten und dem zweiten XYZ-Tisch 8a und 8b ist an einer Säule 10 über eine Schwalbenschwanzführung 11 angebracht. Die Brücke 3 ist in Z-Richtung bzw. in der Höhe relativ zu der Oberfläche der XYZ-Tische 8a und 8b durch die Höhenverstellung der Säule 10 verstellbar. Die Bewegung der Brücke 3 ermöglicht das Grob-Einstellen der auf den beiden Tische 8a und 8b befindlichen Objekte, deren Strukturen verglichen werden sollen. Die Säule 10 selbst ist mit einem Bodenteil 12 verbunden, das wesentlich breiter ist als die Säule 10, um für das vergleichende optische System 1 eine ausreichende Standfestigkeit und Standsicherheit zu erreichen. Zwischen dem ersten als auch auf dem zweiten XYZ-Tisch 8a und 8b ist eine Steuer- und Einstellvorrichtung 14 vorgesehen, über die verschiedene Funktionen des vergleichenden optischen Systems 1 einstellbar bzw. veränderbar sind. Die Steuer- und Einstellvorrichtung 14 besitzt mehrere Betätigungselemente (Beschreibung hierzu siehe Fig. 3), über die verschiedene Funktionen des vergleichenden optischen Systems 1 betätigbar sind. Es ist selbstverständlich, dass die in Fig. 1 dargestellte Steuer- und Einstellvorrichtung 14 verschieden ausgeführt sein kann.

Beide XYZ-Tische 8a und 8b sind über mehrere Motore 16 in der X-Richtung, der Y-Richtung und der Z-Richtung verstellbar. Ferner kann dem vergleichenden optischen System 1 ebenfalls eine erste und eine zweite Fernsteuereinrichtung 18a und 18b zugeordnet sein. Die erste und eine zweite Fernsteuereinrichtung 18a und 18b sind in dieser Ausführungsform jeweils über ein Kabel 19 mit dem vergleichenden optischen System 1 verbunden. Jede der Fernsteuereinrichtungen 18a und 18b besitzt eine Vielzahl von Betätigungselementen 24, die für verschieden motorisierte Funktionen des vergleichenden optischen Systems 1 belegbar sind. Es ist selbstverständlich, dass die Verbindung beliebige technische Ausgestaltungen annehmen kann, wie z.B. Funk, Infrarot, etc. Dem vergleichenden optischen System 1 kann zusätzlich ein PC 20 zugeordnet sein, der über ein RS232-Kablel oder ein USB-Kabel 21 Steuersignale an das vergleichende optische System 1 liefert bzw. Bilddaten oder Einstelldaten vom vergleichenden optischen System 1 erhält. Die Bilddaten werden dem Benutzer auf einem Monitor 22 dargestellt, der mit dem PC 20 verbunden ist. Ebenfalls können auf dem Monitor 22 dem Benutzer die aktuellen Einstelldaten des vergleichenden optischen Systems 1 dargestellt werden.

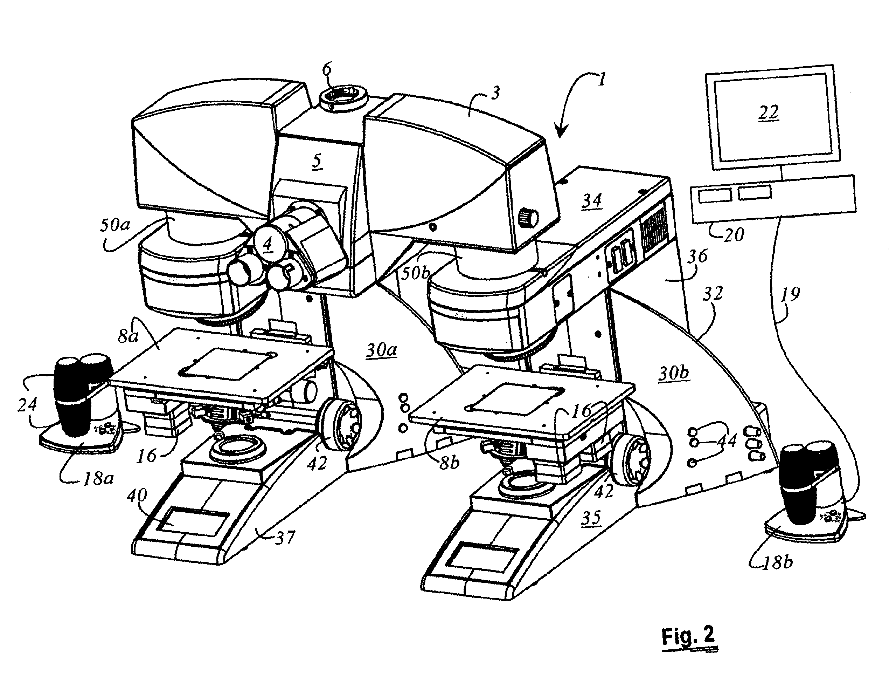

Fig. 2 zeigt eine perspektivische Ansicht eines vergleichenden optischen Systems 1, wobei die optischen Teilsysteme in dieser Ausführungsform aus einen ersten und einem zweiten Mikroskop 30a und 30b bestehen. Elemente, die den Elementen aus Fig. 1 entsprechen, sind mit dem gleichen Bezugszeichen bezeichnet. Das erste und das zweite Mikroskop 30a und 30b sind über eine Brücke 3 miteinander verbunden. Jedes Mikroskop 30a und 30b besteht aus einem Stativ, das aus einem Basisteil 32 besteht. Das Basisteil 32 ist in drei Hauptabschnitte unterteilt, die sich aus einem Querhauptabschnitt 34, einem Stativsäulenabschnitt 36 und einem Stativfußabschnitt 35 zusammensetzen. Am Stativsäulenabschnitt 36 ist ein XYZ-Tisch 8a bzw. 8b befestigt. Jedes Mikroskop 30a und 30b ist mit einer Durchlichtbeleuchtung und einer Auflichtbeleuchtung (beide nicht dargestellt) versehen.

Der Stativfußabschnitt 35 ist im Bereich gegenüber dem Stativsäulenabschnitt 36 konvex gekrümmt und besitzt im konvex gekrümmten Bereich 37 ein Display 40. Das Display 40 kann ebenso als ein Touchscreen ausgebildet sein, der es dem Benutzer erlaubt hierüber Parametereingaben zu machen bzw. bestimmte Messmethoden aufzurufen. Ist das Display 40 nicht als Touchscreen ausgestaltet, so werden über das Display 40 aktuelle Einstelldaten des jeweiligen Mikroskops 30a oder 30b visuell dargestellt. Hinzu kommt, dass an jedem Mikroskop 30a und 30b jeweils ein Triebknopf 42 angebracht ist, der z.B. dem jedem Mikroskop 30a oder 30b zugeordneten XYZ-Tisch 8a oder 8b in seiner Höhe (Z-Richtung) verstellt. Ebenso ist es denkbar auf den Triebknopf 42 zusätzlich noch andere Funktionen zu legen.

Im Bereich um den Triebknopf 42 sind mehrere Betätigungselemente 44 vorgesehen, über die ebenfalls Mikroskopfunktionen schaltbar sind. Die Mikroskopfunktionen sind z.B. die Filterwechsel, Blendenwahl, Revolverbewegung usw.

Die Brücke 3 ist am Anschlusselement 50a und 50b eines jeden Mikroskops 30a und 30b befestigt. Die Brücke 3 besitzt analog zu Fig. 1 einen Einblick 4 für einen Benutzer und einen Tubus 5 mit einem Anschluss 6 für eine Kamera (nicht dargestellt). Der Einblick 4 für den Benutzer kann schwenkbar ausgestaltet sein, um für den Benutzer eine ergonomische Arbeitsposition zu erhalten. Beide XYZ-Tische 8a und 8b sind über mehrere Motore 16 in der X-Richtung, der Y-Richtung und der Z-Richtung verstellbar. Ferner ist dem vergleichenden optischen System 1 analog zu Fig. 1 ebenfalls die erste und zweite Fernsteuereinrichtung 18a und 18b zugeordnet. Diese sind jeweils über ein Kabel 19 mit dem vergleichenden optischen System 1 verbunden oder dem PC 20 verbunden. Es ist selbstverständlich, dass die Verbindung beliebige technische Ausgestaltungen annehmen kann, wie z.B. Funk, Infrarot, etc. Ferner ist dem PC 20 ein Display 22 zugeordnet.

Fig. 3 eine Detailansicht der Steuer- und Einstellvorrichtung 14 aus Fig. 1, mit der die XYZ-Tische 8a und 8b des vergleichenden optischen Systems synchron bewegbar sind. Die Steuer- und Einstellvorrichtung 14 umfasst eine Vielzahl von Einstellelementen für das vergleichende optische System 1. Auf einer Stirnseite 14a der Steuer- und Einstellvorrichtung 14 ist ein Schalter 60 vorgesehen, durch dessen Betätigung eine Höhenverstellung der Säule 10 (Fig. 1) erfolgt. Somit erreicht man eine Grobeinstellung (Fokus) auf die Objekte, die sich auf den XYZ-Tischen 8a und 8b des vergleichenden optischen Systems 1 aus Fig. 1 befinden. Direkt über dem Schalter 60 ist ein Ein-/Ausschalter 61 für eine Synchronverstellung der beiden XYZ-Tische 8a und 8b. Links neben dem Schalter 60 ist ein X-Betätigungselement 62a für die Verstellung des ersten XYZ-Tisches 8a in X-Richtung. Rechts neben dem Schalter 60 ist ein X-Betätigungselement 62b für die Verstellung des zweiten XYZ-Tisches 8b in X-Richtung. Über dem X-Betätigungselement 62a ist ein Verstellelement 63a für eine Beleuchtung vorgesehen, womit die Lichtintensität einer externen Lichtquelle (nicht dargestellt) verändert werden kann. Ebenso ist über dem X-Betätigungselement 62b ein Verstellelement 63b für eine Beleuchtung, womit die Lichtintensität einer externen Lichtquelle (nicht dargestellt) verändert werden kann, deren Licht auf den zweiten XYZ-Tisch 8b gerichtet ist.

In Fig. 3 ist nur eine erste Seitenfläche 14b der Steuer- und Einstellvorrichtung 14 sichtbar dargestellt. Auf der ersten Seitenfläche 14b ist ein Y-Betätigungselement 64b für die Verstellung des zweiten XYZ-Tisches 8b in Y-Richtung. Ebenso ist an der ersten Seitenfläche 14b eine Z-Feinverstellung 65b für den zweiten XYZ-Tisch 8b in Z-Richtung vorgesehen. Eine Z-Feinverstellung 65a für den ersten XYZ-Tisch 8a ist auf der zweiten Seitenfläche 14c vorgesehen.

Die Steuer- und Einstellvorrichtung 14 besitzt ferner eine Deckfläche 14d, auf der mehrere Betätigungselemente 70, 71,72, 73, 74, 75 und 76 angebracht sind, die für die Veränderung der Bilddarstellung vorgesehen sind. Das Betätigungselement 70 dient zur Erzeugung eines Mischbildes, wobei das Bild des Objekts auf dem ersten XYZ-Tisch 8a mit dem Objekt auf dem zweiten XYZ-Tisch 8b überlagert wird. Das Betätigungselement 71 dient zur Erzeugung einer Nebeneinanderdarstellung des Objekts auf dem ersten XYZ-Tisch 8a mit dem Objekt auf dem zweiten XYZ-Tisch 8b. Das Betätigungselement 72 dient zur Erzeugung einer Darstellung des Bildes des Objekts auf dem ersten XYZ-Tisch 8a. Das Betätigungselement 73 dient zur Erzeugung einer Darstellung des Bildes des Objekts auf dem zweiten XYZ-Tisch 8b. Das Betätigungselement 74 dient zu einer manuellen Blendenabstimmung. Das Betätigungselement 75 dient zu einer manuellen Seitenverschiebung der Blenden. Das Betätigungselement 76 dient zu einer Nachvergrößerung der darzustellenden Objekte. In einer besonderen Ausführungsform ist eine 1,5-fache Vergrößerung vorgesehen.

Der Ein-/Ausschalter 61 für eine Synchronverstellung der beiden XYZ-Tische 8a und 8b ist derart ausgestaltet, dass die Funktion der Bedienelemente so gekoppelt ist, dass die vorher unabhängigen X-Betätigungselemente 62a und 62b, die Y-Betätigungselemente 64a und 64b und die Z-Feinverstellung 65a und 65b für jeden einzelnen XYZ-Tisch 8a und 8b auf beide XYZ-Tische 8a und 8b synchron wirken. Nach einmaligem Einstellen der beiden XYZ-Tische 8a und 8b werden die zu untersuchenden Strukturen verglichen. Diese Strukturen sind von ihrer Dimension oft größer als der Bereich, der im Okular bzw. mit der angeschlossenen Kamera zu sehen ist. Um das gesamte Objekt vergleichen zu können, müssen beide XYZ-Tische 8a und 8b synchron in X-Richtung, Y-Richtung und der Z-Richtung verschoben werden. Hierdurch ist es möglich, mit nur jeweils einem X-Betätigungselement oder Y-Betätigungselement oder der Z-Feinverstellung für jede der Achsen X, Y und Z die beiden XYZ-Tische 8a und 8b synchron zu verschieben, um somit die Auswertung der zu untersuchenden Objekte zu verbessern. Hinzu kommt, dass sich die Ergonomie des gesamten vergleichenden optischen System 1 erheblich verbessert. Eine Voraussetzung für die Synchronisierung ist die Motorisierung der drei Achsen der XYZ-Tische 8a und 8b. Dies gilt sowohl für die Makroskope 2a und 2b oder die Mikroskope 30a und 30b, die durch die Brücke 3 verbunden sind.

Neben der Steuer- und Einstellvorrichtung 14 für die Makroskope 2a und 2b sind diesen ebenfalls noch eine erste Fernsteuereinrichtung und zweite Fernsteuereinrichtung 18a und 18b zugeordnet. Nach dem einmaligen Einstellen der Makroskope 2a und 2b oder Mikroskope 30a und 30b auf herkömmliche Art wird durch eine Taste bzw. ein Kommando vom PC (über RS232, USB etc.) die Funktion der Betätigungselemente so gekoppelt, dass bei der Betätigung eines beliebigen Betätigungselements oder der Z-Feinverstellung für eine Richtung beide XYZ-Tische synchron bewegt werden. Nun können z. B. über das X-Bedienelement 62b des zweiten XYZ-Tisches 8b und das X-Bedienelement 62a des ersten XYZ-Tisches 8a beide XYZ-Tische 8a und 8b synchron in x-Richtung verfahren werden. Das gleiche gilt für die Achsen in Y-Richtung und Z-Richtung.

Diese Funktion kann, wie bei dem vergleichenden optischen System 1, bei dem Makroskope 2a und 2b verwendet werden, durch die eingebaute Elektronik eingeschaltet werden. Werden zwei Mikroskope 30a und 30b aus zwei unabhängig funktionierenden Stativen mit einer Brüche 3 zusammengeschaltet, dann erfolgt die elektronische Synchronisation der XYZ-Tische 8a und 8b über Schnittstellen bzw. dem PC 20. Wie in Fig. 2 dargestellt ist, sind dem ersten Mikroskop 30a und dem zweiten Mikroskop 30b jeweils eine erste Fernsteuereinrichtung 18a und eine zweite Fernsteuereinrichtung 18b zugeordnet, die Betätigungselemente 24 für die X-Richtung, Y-Richtung und die Z-Richtung eines jeden XYZ-Tisches 8a und 8b aufweisen. Wie bei den Makroskopen 2a und 2b ist es durch die Synchronisation möglich beide XYZ-Tische 8a und 8b der Mikroskope 30a und 30b mit nur einer Fernsteuereinrichtung 18a oder 18b synchron zu steuern.

### Bezugszeichenliste

- 1: vergleichendes optisches System
- 2a: erstes Makroskop
- 2b: zweites Makroskop
- 3: Brücke
- 4: Einblick
- 5: Tubus
- 6: Anschluss
- 7: Abschluss
- 8a: erster XYZ-Tisch
- 8b: zweiter XYZ-Tisch
- 10: Säule
- 11: Schwalbenschwanzführung
- 12: Bodenteil
- 14: Steuer- und Einstellvorrichtung
- 14a: Stirnseite
- 14b: erste Seitenfläche
- 14c: zweite Seitenfläche
- 14d: Deckfläche
- 16: Motore
- 18a: erste Fernsteuereinrichtung
- 18b: zweite Fernsteuereinrichtung
- 19: Kabel
- 20: PC
- 21: RS232-Kabel oder ein USB-Kabel
- 22: Monitor
- 24: Betätigungselemente
- 30a: erstes Mikroskop
- 30b: zweites Mikroskop
- 32: Basisteil
- 34: Querhauptabschnitt
- 35: Stativfußabschnitt
- 36: Stativsäulenabschnitt
- 37: gekrümmter Bereich
- 40: Display
- 42: Triebknopf
- 44: Betätigungselemente
- 50a: Anschlusselement
- 50b: Anschlusselement
- 60: Schalter
- 61: Ein-/Ausschalter
- 62a: X-Betätigungselement
- 62b: X-Betätigungselement
- 63a: Verstellelement für Beleuchtung
- 63b: Verstellelement für Beleuchtung
- 64b: Y-Betätigungselement
- 65a: Z-Feinverstellung
- 65b: Z-Feinverstellung
- 70: Betätigungselement
- 71: Betätigungselement
- 72: Betätigungselement
- 73: Betätigungselement
- 74: Betätigungselement
- 75: Betätigungselement
- 76: Betätigungselement

## Patentansprüche

1. Vergleichendes optisches System (1) mit zwei Makroskopen (2a,2b) als bildaufnehmende, optische Teilsystemen, die über eine Brücke (3) miteinander verbunden sind, die die Makroskope (2a, 2b) mechanisch und optisch miteinander verbindet, wobei jedes Makroskop einen in X- und Y-Richtung bewegbaren Tisch (8a, 8b) besitzt, auf dem eine zu untersuchende Probe aufgelegt ist, und wobei die Tische (8a, 8b) synchron in X-Richtung bewegbar sind,
**dadurch gekennzeichnet,**
**dass** die Tische (8a, 8b) als motorisch bewegbare XYZ-Tische ausgebildet sind, wobei jeder XYZ-Tisch (8a, 8b) für eine Verstellung in X-Richtung, in Y-Richtung und in Z-Richtung jeweils einen Motor (16) aufweist, und wobei das optische System (1) eine Steuer- und Einstellvorrichtung (14) aufweist, die ein X-Betätigungselement (62a) für die Verstellung des ersten XYZ-Tisches (8a) und ein X-Betätigungselement (62b) für die Verstellung des zweiten XYZ-Tisches (8b), ein Y-Betätigungselement (64a) für die Verstellung des ersten XYZ-Tisches (8a) und ein Y-Betätigungselement (64b) für die Verstellung des zweiten XYZ-Tisches (8b), und eine Z-Feinverstellung (65a) für den ersten XYZ-Tisch (8a) und eine Z-Feinverstellung (65b) für den zweiten XYZ-Tisch (8b) besitzt und einen Ein/Ausschalter (61) für eine Synchronverstellung der beiden XYZ-Tische (8a und 8b) umfasst, die derart wirkt, dass bei eingeschalteten Ein-/Ausschalter (61) für die Synchronverstellung mit nur jeweils einem X-Betätigungselement (62a, 62b) oder Y-Betätigungselement (64a, 64b) oder einer Z-Feinverstellung (65a, 65b) für jede der Achsen X, Y und Z die beiden XYZ-Tische (8a und 8b) synchron verschoben werden.

2. Vergleichendes optisches System nach Anspruch 1,
**dadurch gekennzeichnet, dass** die Brücke (3) an einer Säule (10) angebracht ist und in Z-Richtung in ihrer Höhe relativ zur Oberfläche der XYZ-Tische (8a und 8b) durch eine Höhenverstellung der Säule (10) verstellbar ist.

3. Vergleichendes optisches System nach Anspruch 1,
**dadurch gekennzeichnet, dass** jeweils eine erste Fernsteuereinrichtung (18a) mit einem ersten Makroskop (2a) verbunden ist, und dass eine zweite Fernsteuereinrichtung (18b) mit einem zweiten Makroskop (2b) verbunden ist.

4. Vergleichendes optisches System nach Anspruch 3
**dadurch gekennzeichnet, dass** die erste Fernsteuereinrichtung (18a) und die zweite Fernsteuereinrichtung (18b) eine Vielzahl von Betätigungselementen (24) umfassen, und dass die Betätigungselemente (24) der ersten Fernsteuereinrichtung (18a) und der zweiten Fernsteuereinrichtung (18b) ebenfalls paarweise synchronisierbar sind.

5. Vergleichendes optisches System nach Anspruch 1, **dadurch gekennzeichnet, dass** dem vergleichenden optischen System (1) ein PC (20) zugeordnet ist, der über ein RS232-Kablel oder ein USB-Kabel 21 Steuersignale an das vergleichende optische System (1) liefert bzw. Bilddaten oder Einstelldaten vom vergleichenden optischen System (1) empfängt.

6. Vergleichendes optisches System nach Anspruch 5, **dadurch gekennzeichnet, dass** durch den PC (20) die Synchronisation der XYZ-Tische ein- bzw. ausschaltbar ist.

## Claims

1. Comparison optical system (1) having two macroscopes (2a, 2b) as imaging, optical subsystems which are interconnected via a bridge (3) which interconnects the macroscopes (2a, 2b) mechanically and optically, each macroscope having a stage (8a, 8b) which can be moved in the X- and Y-directions and on which a sample to be examined is placed, and it being possible for the stages (8a, 8b) to be moved synchronously in the X-direction,
**characterized in that**
the stages (8a, 8b) are designed as XYZ stages which can be moved by motor, each XYZ stage (8a, 8b) respectively having a motor (16) for an adjustment in the X-direction, in the Y-direction and in the Z-direction, and the optical system (1) having a control and setting apparatus (14) which has an X-actuation element (62a) for adjusting the first XYZ stage (8a), and an Y-actuation element (62b) for adjusting the second XYZ stage (8b), a Y-actuation element (64a) for adjusting the first XYZ stage (8a) and an Y-actuation element (64b) for adjusting the second XYZ stage (8b), and a Z-fine adjustment (65a) for the first XYZ stage (8a) and a Z-fine adjustment (65b) for the second XYZ stage (8b), and comprises an on/off switch (61) for a synchronous adjustment of the two XYZ stages (8a and 8b), which act in such a way that, with an on/off switch (61) for the synchronous adjustment switched on, the two XYZ stages (8a and 8b) are synchronously displaced with the aid of only in each case an X-actuation element (62a, 62b) or Y-actuation element (64a, 64b) or a Z-fine adjustment (65a, 65b) for each of the axes X, Y and Z.

2. Comparison optical system according to Claim 1, **characterized in that** the bridge (3) is fixed on a column (10) and can be height-adjusted in the Z-direction relative to the surface of the XYZ stages (8a and 8b) by adjusting the height of the column (10).

3. Comparison optical system according to Claim 1, **characterized in that** in each case a first remote control device (18a) is connected to a first macroscope (2a), and **in that** a second remote control device (18b) is connected to a second macroscope (2b).

4. Comparison optical system according to Claim 3, **characterized in that** the first remote control device (18a) and the second remote control device (18b) comprise a multiplicity of actuation elements (24) and **in that** the actuation elements (24) of the first remote control device (18a) and of the second remote control device (18b) can likewise be synchronized in pairs.

5. Comparison optical system according to Claim 1, **characterized in that** a PC (20) is assigned to the comparison optical system (1), and supplies control signals to the comparison optical system (1) via an RS232 cable or a USB cable (21) or receives image data or setting data from the comparison optical system (1).

6. Comparison optical system according to Claim 5, **characterized in that** the PC (20) can be used to switch the synchronization of the XYZ stages on and off.

## Revendications

1. Système optique comparatif (1) comprenant deux macroscopes (2a, 2b) faisant office de systèmes optiques partiels d'enregistrement d'image, lesquels sont reliés entre eux par le biais d'un pont (3) qui relie mécaniquement et optiquement les macroscopes (2a, 2b) entre eux, chaque macroscope possédant un plateau (8a, 8b) pouvant être déplacé dans le sens X et Y et sur lequel est déposé un échantillon à examiner, les plateaux (8a, 8b) pouvant être déplacés de manière synchrone dans le sens X,
**caractérisé en ce**
**que** les plateaux (8a, 8b) sont réalisés sous la forme de plateaux XYZ à déplacement motorisé, chaque plateau XYZ (8a, 8b) présentant à chaque fois un moteur (16) pour un positionnement dans le sens X, dans le sens Y et dans le sens Z et le système optique (1) présentant un dispositif de commande et de réglage (14) qui possède un élément d'actionnement X (62a) pour le positionnement du premier plateau XYZ (8a) et un élément d'actionnement X (62b) pour le positionnement du deuxième plateau XYZ (8b), un élément d'actionnement Y (64a) pour le positionnement du premier plateau XYZ (8a) et un élément d'actionnement Y (64b) pour le positionnement du deuxième plateau XYZ (8b) ainsi qu'un réglage fin Z (65a) pour le premier plateau XYZ (8a) et un réglage fin Z (65b) pour le deuxième plateau XYZ (8b) et comprend un commutateur marche/arrêt (61) pour un positionnement synchrone des deux plateaux XYZ (8a et 8b) qui agit de telle sorte que lorsque le commutateur marche/arrêt (61) est activé pour le positionnement synchrone, les deux plateaux XYZ (8a et 8b) sont positionnés de manière synchrone à chaque fois avec un seul élément d'actionnement X (62a, 62b) ou un élément d'actionnement Y (64a, 64b) ou un réglage fin Z (65a, 65b) pour chacun des axes X, Y et Z.

2. Système optique comparatif selon la revendication 1, **caractérisé en ce que** le pont (3) est monté sur une colonne (10) et peut être positionné dans le sens Z en hauteur par rapport à la surface des plateaux XYZ (8a et 8b) par un positionnement en hauteur de la colonne (10).

3. Système optique comparatif selon la revendication 1, **caractérisé en ce qu'**un premier dispositif de commande à distance (18a) est à chaque fois relié avec un premier macroscope (2a) et qu'un deuxième dispositif de commande à distance (18b) est relié avec un deuxième macroscope (2b).

4. Système optique comparatif selon la revendication 3, **caractérisé en ce que** le premier dispositif de commande à distance (18a) et le deuxième dispositif de commande à distance (18b) comprennent une pluralité d'éléments d'actionnement (24) et que les éléments d'actionnement (24) du premier dispositif de commande à distance (18a) et du deuxième dispositif de commande à distance (18b) peuvent eux aussi être synchronisés par paires.

5. Système optique comparatif selon la revendication 1, **caractérisé en ce qu'**au système optique comparatif (1) est associé un PC (20) qui délivre des signaux de commande au système optique comparatif (1) par le biais d'un câble RS232 ou d'un câble USB 21 ou reçoit des données d'image ou des données de réglage de la part du système optique comparatif (1).

6. Système optique comparatif selon la revendication 5, **caractérisé en ce que** la synchronisation des plateaux XYZ peut être activée ou désactivée par le PC (20).
